# EUROPÄISCHE PATENTSCHRIFT

(11) **EP 4 078 704 B1**
(45) Veröffentlichungstag und Bekanntmachung des Hinweises auf die Patenterteilung: **08.11.2023**
(21) Anmeldenummer: 21708153.8
(22) Anmeldetag: 18.02.2021
(51) Int. Cl.: H01M 8/0267, H01M 8/0258, H01M 8/0297, H01M 8/026, H01M 8/1018

(54) **BRENNSTOFFZELLENKÜHLUNG**
COOLING OF A FUEL CELL
REFROIDISSEMENT D'UNE PILE À COMBUSTIBLE

(30) Priorität: 11.05.2020 DE 102020205871
(43) Veröffentlichungstag der Anmeldung: 26.10.2022
(73) Patentinhaber: Siemens Energy Global GmbH & Co. KG, 81739 München (DE)
(72) Erfinder: BRANDT, Torsten, 91301 Forchheim (DE); BRAUNECKER, Michael, 90419 Nürnberg (DE); BÄRNREUTHER, Frank, 91413 Neustadt Aisch (DE); MATTEJAT, Arno, 91056 Erlangen (DE)
(86) Internationale Anmeldenummer: PCT/EP2021/053978
(87) Internationale Veröffentlichungsnummer: WO 2021/228445

(56) Entgegenhaltungen:
- DE-A1-102014 206 336
- US-A1- 2006 046 130
- US-A1- 2007 015 019
- US-A1- 2017 279 131

## Beschreibung

Die Erfindung betrifft eine Bipolarplatte für die Kühlung einer elektrochemischen Zelle, sowie eine elektrochemische Zelle, insbesondere eine Brennstoffzelle, mit einer solchen Bipolarplatte.

Elektrochemische Zellen sind allgemein bekannt. In einer galvanischen elektrochemischen Zelle wird, in Umkehrung einer Elektrolyse, chemische in elektrische Energie umgewandelt. Eine bekannte Vorrichtung einer solchen galvanischen Zelle ist die Brennstoffzelle, bei der der chemische Energieträger nicht in der Zelle gespeichert, sondern von außen kontinuierlich zur Verfügung gestellt wird, wodurch ein kontinuierlicher Betrieb prinzipiell möglich ist.

Eine bekannter Brennstoffzellentyp ist die Niedrigtemperatur-Brennstoffzelle auf Basis der Polymer-Elektrolyt-Membran-(PEM)-Technologie, deren Hauptanwendungsgebiete vor allem im mobilen Bereich ohne Abwärmenutzung sind, beispielsweise in U-Booten.

Wesentliches Element einer PEM-Einzelzelle ist eine Membranelektrodeneinheit. Diese besteht aus zwei Elektroden (einer Anode und einer Kathode) und einer sich zwischen den beiden Elektroden befindlichen Elektrolytmembran. Zwischen den Elektroden und der Elektrolytmembran befindet sich eine Katalysatorschicht, in der die wichtigen physikalischen und elektrochemischen Vorgänge, wie Adsorption von Wasserstoff und Sauerstoff am Katalysator, Abgabe und Aufnahme von Elektronen und die Bildung von Wasser kathodenseitig durch Kombination von durch die Membran diffundierten Protonen und (reduziertem) Sauerstoff erfolgen.

In einem Brennstoffzellenstapel befinden sich die Elektroden an der der Elektrolytmembran bzw. Katalysatorschicht abgewandten Seite über eine Gasdiffusionsschicht in Kontakt mit jeweils einer sogenannten Bipolarplatte. Dieses Bauteil hat die Aufgabe, die einzelnen Brennstoffzellen (medienseitig) zu trennen, für Stromfluss im Zellstapel zu sorgen und die Reaktionswärme zu entfernen. Um einen effektiven Stromfluss zu gewährleisten, bestehen die Bipolarplatten aus einem elektrisch-leitenden Material, welches einen niedrigen Übergangswiderstand zu den Elektroden aufweisen muss.

Typischerweise bestehen diese Bipolarplatten aus zwei Plattenelementen, die mit einer oft eingefrästen Gaskanalstruktur versehen sind, und werden im Betrieb von Kühlwasser durchströmt.

Ein Beispiel für eine Bipolarplatte findet sich in der DE 10 2014 206 336 A1. Die dort offenbarte Bipolarplatte umfasst zwei miteinander verfügte Platten, die im Querschnitt je eine periodische Struktur mit Ausnehmungen aufweisen, wobei Vertiefungen der Ausnehmungen beider Platten einen Kühlmittelströmungsbereich bildend voneinander wegweisend angeordnet sind. Die Ausnehmungen sind dabei ausschließlich in einer in Hauptströmungsrichtung vor und/oder nach einem Flussfeld angeordneten Verteilerstruktur der Bipolarplatte ausgebildet und überschneiden sich teilweise, sodass ein eine Längs- und Querströmung erlaubender Kühlmittelströmungsbereich vorgesehen ist.

Weitere Beispiele für eine Bipolarplatte sind aus der US 2007/0015019 A1 und aus der WO 2004/107486 A1 bekannt. Die Separator- oder Bipolarplatte umfasst zwei profilierte, sich an Kontaktflächen berührende Plattenelemente, zwischen denen ein Fluid- oder Strömungsraum für das Kühlmittel gebildet ist. Die Plattenelemente weisen mehrere auf der Oberfläche der Plattenelemente angeordnete Prägungen nach Art von voneinander abgewandten runden Erhebungen mit einander zugewandten Vertiefungen auf. Die Prägungen beider Plattenelemente sind relativ zueinander versetzt, sodass Noppenmittelpunkte eines Plattenelements über einem Dreieck-Mittelpunkt des anderen Plattenelements liegen, sodass Strömungswege für das Kühlwasser zwischen den Platten freigegeben sind, in denen das Wasser aus der Noppe des unteren Plattenelements in die Noppe des oberen Plattenelements strömen kann.

Alle Erhebungen/Noppen oder alle Erhebungen/Noppen eines bestimmten Bereichs sind dabei gleich groß. Die Durchlassbereiche sind an allen Positionen gleich groß. Trotzdem ist das Temperaturfeld inhomogen und weist lokale Spitzen auf.

Bereiche mit hohen Temperaturen beeinträchtigen dort die Haltbarkeit der Materialien, insbesondere, wenn die Temperaturen deutlich über dem mittleren Temperaturverlauf liegen.

Aufgabe der Erfindung ist es, eine Bipolarplatte für eine elektrochemische Zelle bereitzustellen, die eine verbesserte Kühlung ermöglicht und die zugleich möglichst einfach und kostengünstig herzustellen ist. Eine weitere Aufgabe der Erfindung ist es, eine elektrochemische Zelle mit einer solchen Bipolarplatte bereitzustellen.

Die Erfindung geht von der Erkenntnis aus, dass in den Bereichen der Temperaturspitzen der Kühlwasserstrom geringer als in besser gekühlten Bereichen ist und dass diese Ungleichmä-ßigkeit dadurch verursacht wird, dass der Strömungswiderstand gleichmäßig über der Fläche isotrop ist. Dies führt dazu, dass besonders die Rand- und Eckbereiche weniger durchströmt werden als der Mittenbereich des Kühlfeldes.

Die Erfindung löst die auf eine Bipolarplatte gerichtete Aufgabe, indem sie vorsieht, dass bei einer derartigen Bipolarplatte für eine elektrochemische Zelle, umfassend einen zwischen einem ersten Plattenelement und einem zweiten Plattenelement angeordneten Strömungsraum mit einem Strömungseinlass sowie einem Strömungsauslass für ein den Strömungsraum durchströmendes Kühlmittel, wobei jedes Plattenelement eine Kontaktebene zum Kontaktieren des jeweils anderen Plattenelements sowie zwischen dem Strömungseinlass und dem Strömungsauslass eine Vielzahl von aus der Kontaktebene herausragenden und dem jeweils anderen Plattenelement abgewandten Erhebungen aufweist, die zur Kontaktebene hin Öffnungen aufweisen, und wobei erste Strömungskanäle durch die Öffnungen der Erhebungen gebildet sind, indem die Erhebungen beider Plattenelemente zueinander versetzt sind, wobei jede Erhebung mindestens eine Erhebung des jeweils anderen Plattenelements zumindest teilweise überlappt, ein richtungsabhängiger Strömungswiderstand in den ersten Strömungskanälen der Bipolarplatte eingestellt ist, indem die Erhebungen auf den Plattenelementen in den Ecken regelmäßiger Dreiecke angeordnet sind und die Plattenelemente gegeneinander versetzt angeordnet sind, sodass in einer Projektion auf die Kontaktebene eine Erhebung des ersten Plattenelements innerhalb eines Dreiecks aus Erhebungen des zweiten Plattenelements außermittig angeordnet ist. Dadurch entstehen Durchlassbereiche, die nicht mehr alle gleich sind, sondern in bestimmten Bereichen größer, in anderen kleiner werden. Dadurch wird der Strömungswiderstand inhomogen bzw. richtungsabhängig. Es gibt Bereiche (Linien), in denen er kleiner ist und solche, in denen er größer ist als bei der zentrierten Anordnung. Durch diese Inhomogenität lässt sich das Kühlwasser z. B. bevorzugt in die Breite, also quer zur direkten Linie zwischen Strömungseinlass und Strömungsauslass, lenken, insbesondere in die Ecken der Bipolarplatte, und dann erst in die Länge der Zelle leiten. Das Stromlinienbild wird damit ebenfalls in die Breite gezogen und das Kühlwasser kann besser als im Fall einer homogenen Strömungswiderstandverteilung in die Eckbereiche geleitet werden. Die genaue Einstellung des Strömungsfeldes und damit des Temperaturfeldes kann durch das Maß der Verschiebung beeinflusst werden.

Dabei ist es vorteilhaft, wenn der Strömungswiderstand in Richtung einer Verbindungslinie zwischen Strömungseinlass und Strömungsauslass größer ist als senkrecht dazu, sodass insbesondere die Randbereiche ohne Strömungseinlass oder Strömungsauslass von dieser Inhomogenität profitieren.

Es ist weiterhin vorteilhaft, wenn die Erhebungen im Hinblick auf die Herstellung der Plattenelemente aber auch im Hinblick auf ein Strömungsverhalten des Kühlmediums in den ersten Strömungskanälen kegelstumpfförmige Profile aufweisen.

In einer vorteilhaften Ausführungsform sind die Erhebungen auf den Plattenelementen in den Ecken regelmäßiger Dreiecke angeordnet und die Plattenelemente sind gegeneinander versetzt angeordnet, sodass in einer Projektion auf die Kontaktebene eine Erhebung des ersten Plattenelements innerhalb eines Dreiecks aus Erhebungen des zweiten Plattenelements außermittig angeordnet ist. Dadurch entstehen Durchlassbereiche, die nicht mehr alle gleich sind, sondern in bestimmten Bereichen größer, in anderen kleiner werden. Dadurch wird der Strömungswiderstand inhomogen bzw. richtungsabhängig. Es gibt Bereiche (Linien), in denen er kleiner ist und solche, in denen er größer ist als bei der zentrierten Anordnung. Durch diese Inhomogenität lässt sich das Kühlwasser z. B. bevorzugt in die Breite, also quer zur direkten Linie zwischen Strömungseinlass und Strömungsauslass, lenken, insbesondere in die Ecken der Bipolarplatte, und dann erst in die Länge der Zelle leiten. Das Stromlinienbild wird damit ebenfalls in die Breite gezogen und das Kühlwasser kann besser als im Fall einer homogenen Strömungswiderstandverteilung in die Eckbereiche geleitet werden. Die genaue Einstellung des Strömungsfeldes und damit des Temperaturfeldes kann durch das Maß der Verschiebung beeinflusst werden.

Es ist insbesondere vorteilhaft, wenn eine Hauptachse eines Plattenelements, die durch zwei benachbarte Erhebungen eines Plattenelements definiert ist, senkrecht zur Verbindungslinie orientiert ist, wobei eine Erhebung des ersten Plattenelements aus einer zentrierten Position relativ zu den nächsten drei Erhebungen des zweiten Plattenelements parallel zur Verbindungslinie verschoben ist, sodass ihr Abstand zur nächsten Erhebung des zweiten Plattenelements in einer Richtung parallel zur Verbindungslinie größer ist, als zu den beiden anderen nächsten Erhebungen des zweiten Plattenelements. In einer solchen Konfiguration wird der Kühlmediumfluss senkrecht zur direkten Verbindungslinie zwischen Strömungseinlass und Strömungsauslass bevorzugt eingestellt.

In einer vorteilhaften Ausführungsform der Erfindung sind mindestens zwei Erhebungen eines Plattenelements zu einem zweiten Strömungskanal zusammengefasst. Die Durchlassbereiche zwischen den beiden Plattenelementen werden dadurch größer und somit der Strömungswiderstand kleiner.

Es kann zweckmäßig sein, wenn die zweiten Strömungskanäle zumindest in Randbereichen der Bipolarplatte ohne Strömungseinlass oder Strömungsauslass angeordnet sind. Ganz besonders vorteilhaft ist es, wenn die zweiten Strömungskanäle einen entlang der Ränder der Bipolarplatte, d.h. in den Randbereichen, umlaufenden Ringkanal bilden.

Um den Strömungswiderstand in bestimmten Bereichen weiter zu verringern kann es vorteilhaft sein, wenn zwischen zwei benachbarten zweiten Strömungskanälen eines Plattenelements ein Trennsteg gebildet ist, dessen Abstand zur Kontaktebene von Null verschieden ist. Eine Höhe des Trennstegs kann, wenn nötig, Null sein, d.h. es gibt keinen Trennsteg 16 mehr zwischen zwei benachbarten zweiten Strömungskanälen. Durch geeignete Wahl der Steghöhe kann der Strömungswiderstand und damit der Volumenstrom im gewünschten Maß eingestellt werden.

In einer vorteilhaften Ausführungsform der Erfindung ist eine Orientierung eines zweiten Strömungskanals des ersten Plattenelements von der Orientierung eines zweiten Strömungskanals des zweiten Plattenelements verschieden. Somit kann zwischen den zweiten Strömungskanälen eines Plattenelements ein verbesserter Austausch des Kühlmediums erfolgen.

Die auf eine elektrochemische Zelle gerichtete Aufgabe wird gelöst durch eine elektrochemische Zelle umfassend mindestens eine Bipolarplatte nach der Erfindung.

Mit dem Versatz der Erhebungen, dem Ringkanal oder auch einer Kombination aus beidem ist die Möglichkeit geschaffen, das Strömungsfeld so zu beeinflussen, dass das Temperaturfeld gleichmäßig wird und Temperaturspitzen vermieden werden. Dieses Prinzip lässt sich auf beliebige äußere Geometrien von Kühlkarten anwenden (rechteckige, quadratische, liegende oder stehende Anordnung).

Durch den Versatz der Erhebungen wird lediglich der Kühlwasserraum beeinflusst, der Gasraum der Zellen, der sich außerhalb des Strömungsraums für das Kühlwasser befindet, wird nicht beeinflusst.

Werden zweite Strömungskanäle bzw. ein Ringkanal verwendet, wird der Randbereich bzw. werden die Randbereiche der Gasräume zwar verändert, die Höhe des Steges zwischen den Kanälen lässt aber eine ausreichende Optimierung zwischen Gas- und Wasserverteilung sowie der Ver- und Entsorgung der Gasseiten zu.

Die Erfindung wird beispielhaft anhand der Zeichnungen näher erläutert. Es zeigen schematisch und nicht maßstäblich:
- Figur 1: eine stark vereinfachte Draufsicht auf eine Bipolarplatte,
- Figur 2: eine Draufsicht auf zwei übereinander positionierte Plattenelemente einer Bipolarplatte nach dem Stand der Technik mit homogenem Strömungswiderstand,
- Figur 3: eine etwas detailliertere Draufsicht auf zwei übereinander positionierte Plattenelemente einer Bipolarplatte nach dem Stand der Technik mit einer Schnittlinie,
- Figur 4: in einer Seitenansicht einen Schnitt entlang der Schnittlinie gemäß Figur 3,
- Figur 5: Stromlinien des Kühlwassers nach dem Stand der Technik,
- Figur 6: Stromlinien des Kühlwassers nach der Erfindung,
- Figur 7: ein hydraulisches Grundelement des Kühlwasserraums nach dem Stand der Technik,
- Figur 8: ein hydraulisches Grundelement des Kühlwasserraums nach der Erfindung,
- Figur 9: ein erstes Plattenelement nach der Erfindung in Draufsicht und Seitenansicht,
- Figur 10: eine Draufsicht auf das zweite Plattenelement und
- Figur 11: eine Bipolarplatte und die Anordnung eines Ringkanals.

Gleiche Bezugszeichen haben in verschiedene Figuren die gleiche Bedeutung.

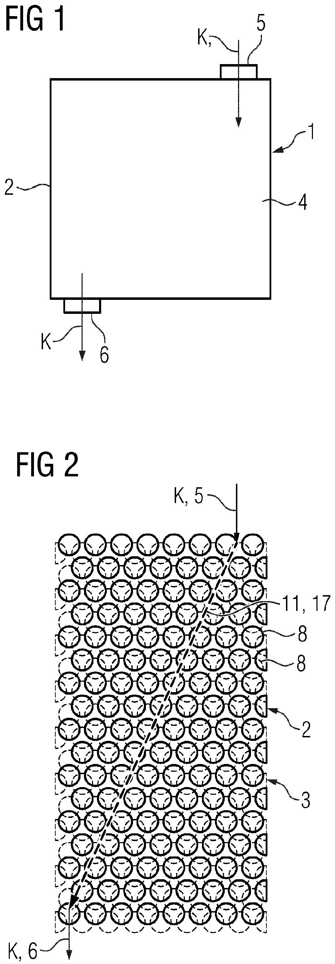

In Figur 1 ist eine Bipolarplatte 1 für eine nicht näher gezeigte Brennstoffzelle in einer schematischen Draufsicht dargestellt. Innerhalb der Bipolarplatte 1 ist ein Strömungsraum 4 für Kühlmittel K, beispielsweise Kühlwasser, ausgebildet. Durch einen Strömungseinlass 5 wird Kühlwasser in den Strömungsraum 4 eingeleitet und durch einen an einer gegenüberliegenden Seite angeordneten Strömungsauslass 6 hinausgeleitet. Der Strömungseinlass 5 und der Strömungsauslass 6 liegen dabei an einer hier nicht näher gezeigten Diagonallinie.

Der Strömungsraum 4 ist auf seinen beiden Flachseiten begrenzt durch zwei Plattenelemente 2, 3 von denen in Figur 1 lediglich ein erstes Plattenelement 2 sichtbar ist. Die Plattenelemente 2, 3 sind metallisch. Die Oberflächen der Plattenelemente 2, 3 weisen zudem eine Profilierung auf, die in Figur 1 nicht gezeigt ist.

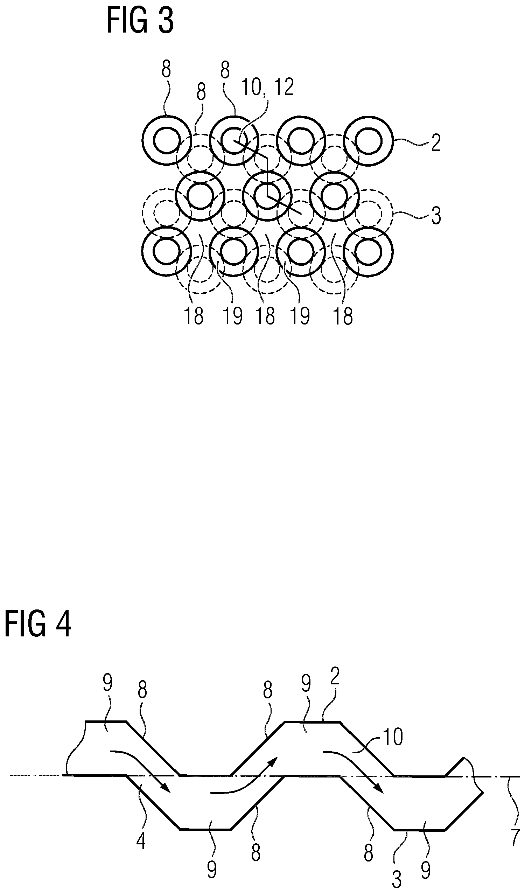

Der Aufbau und die Anordnung der Plattenelemente 2, 3 gemäß dem Stand der Technik ist in den Figuren 2, 3 und 4 gezeigt. In den Plattenelementen 2, 3 ist eine Vielzahl von noppenförmigen Erhebungen 8 eingeprägt. In den Figuren 2 und 3 sind die Erhebungen 8 des ersten Plattenelements 2 mit durchgehender Linie gezeichnet, während die Erhebungen 8 des zweiten Plattenelements 3 mit gestrichelter Linie gekennzeichnet sind.

In FIG 2 ist weiterhin eine Hauptströmungsrichtung 17 gezeigt, welche im Wesentlichen durch die Verbindungslinie 11 zwischen dem Strömungseinlass 5 und dem Strömungsauslass 6 dargestellt ist.

Figur 3 zeigt eine etwas detailliertere Draufsicht auf zwei übereinander positionierte Plattenelemente 2, 3 einer Bipolarplatte 1 nach dem Stand der Technik. Insbesondere sind die hydraulischen Grundelemente des Kühlwasserraums der Bipolarplatte 1 dargestellt. Außerdem wird ein möglicher Pfad des Kühlwasserlaufs in der Bipolarplatte 1 beispielhaft mit einer Schnittlinie 12 dargestellt. Die Seitenansicht des Schnitts entlang der Schnittlinie 12 ist in Figur 4 dargestellt und beschreibt am besten, wie sich der Kühlwasserpfad ergibt.

Wie aus Figur 4 ersichtlich, sind die Erhebungen 8 eines der Plattenelemente 2, 3 dem jeweils anderen Plattenelement 2, 3 abgewandt. Die Erhebungen 8 gemäß FIG 2, FIG 3 und FIG 4 weisen alle einen kreisförmigen Querschnitt auf und sind gleich groß und symmetrisch angeordnet. Dabei weist jedes der Plattenelemente 2, 3 eine Kontaktebene 7 auf, mit der es auf dem anderen Plattenelement 2, 3 aufliegt und aus der die Erhebungen 8 nach außen herausragen. Der Kontakt zwischen den beiden Plattenelementen 2, 3 erfolgt in der Kontaktebene 7.

Die im Material der Plattenelemente 2, 3 eingeprägten Erhebungen 8 oder Noppen weisen zur Kontaktebene 7 hin eine Öffnung 9 auf. Im zusammengebauten Zustand der Bipolarplatte 1 sind die Erhebungen 8 zueinander versetzt. Bei einer solchen Anordnung ergeben sich Kontaktbereiche 18 (siehe Figur 3), an denen sich die Plattenelemente 2, 3 berühren und somit kein Kühlwasser fließen kann. Es bilden sich aber auch Bereiche 19, in denen sich die Erhebungen 8 teilweise überlappen. In diesen Überlappbereichen 19 kann Kühlwasser von der einen auf die andere Seite der Kontaktebene 7 fließen, so dass durch die Erhebungen 8 im Strömungsraum 4 eine Vielzahl von diskreten ersten Strömungskanälen 10 für das Kühlwasser K verlaufen. Figur 3 zeigt einen Teil eines ersten Strömungskanals 10, dessen Verlauf auch die Schnittlinie 12 folgt. In Figur 4 ist ein erster Strömungskanal 10 durch die gekrümmten Pfeile angedeutet.

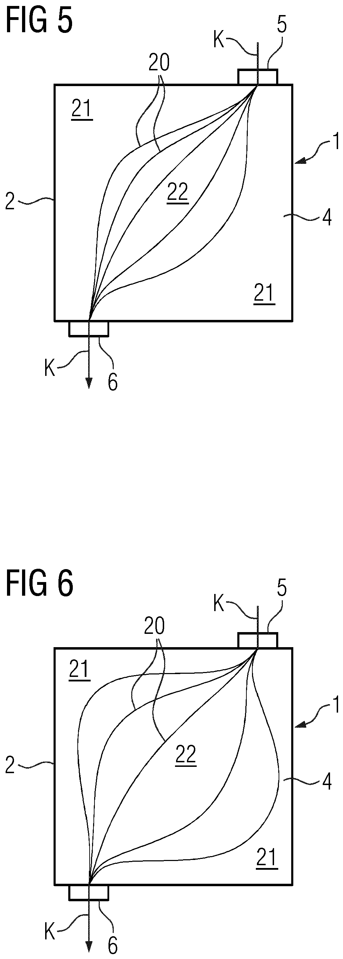

Figur 5 zeigt die Stromlinien 20 des Kühlwassers in der Bipolarplatte 1 nach dem Stand der Technik in einer stark vereinfachten schematischen Darstellung. Eckbereiche 21 werden vergleichsweise gering durchströmt, der Mittenbereich 22 wird vergleichsweise stark durchströmt. Dadurch kommt es zu einer ungleichmäßigen Temperaturverteilung in der Bipolarplatte 1. Wegen des geringen Kühlwasserflusses in den Eckbereichen 21 entstehen dort im Betrieb höhere Temperaturen als im Mittenbereich 22.

Figur 6 zeigt die Stromlinien 20 des Kühlwassers in der Bipolarplatte 1 nach der Erfindung. Die Eckbereiche 21 werden stärker von Kühlwasser durchströmt, der Mittenbereich 22 wird entsprechend schwächer durchströmt. Somit kann sich eine bis in die Eckbereiche homogene Temperaturverteilung ergeben.

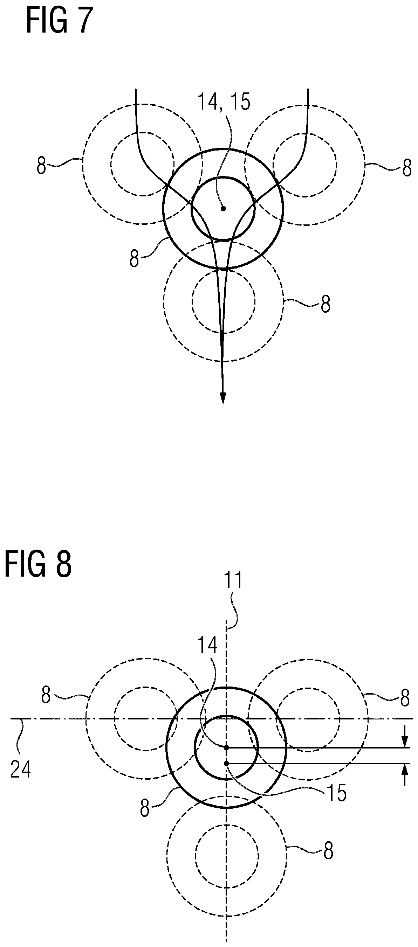

Die Figuren 7 und 8 zeigen gewissermaßen ein hydraulisches Grundelement des Strömungsraums 4 einer Bipolarplatte 1. Figur 7 zeigt den Stand der Technik, bei dem der Mittelpunkt 14 einer Erhebung 8 des ersten Plattenelements 2 über einem Dreieckmittelpunkt 15 des zweiten Plattenelements 3 liegt und bei dem ein Strömungswiderstand für ein Kühlmedium nicht von der Richtung abhängig ist, was dazu führt, dass das Kühlmedium sich den kürzesten Weg vom Strömungseinlass 5 zum Strömungsauslass 6 sucht und der erstreckt sich im Wesentlichen auf der Verbindungslinie 11 (siehe Figur 2). Die Eckbereiche 21 werden vom Kühlmedium weniger durchströmt als der Mittenbereich 22 (siehe Figur 5).

Dieses Strömungsverhalten ändert sich, wenn die Plattenelemente 2, 3 so gegeneinander verschoben werden, dass der Mittelpunkt 14 einer Erhebung 8 des ersten Plattenelements 2 nicht mehr über einem Dreieckmittelpunkt 15 des zweiten Plattenelements 3 liegt, sondern ungefähr in Richtung des Strömungseinlasses 5 verschoben ist, wodurch sich unterschiedlich große Durchlassbereiche für unterschiedliche Richtungen im Strömungsraum 4 ergeben.

Im konkreten Ausführungsbeispiel der Figur 8 ist eine Hauptachse 24 eines Plattenelements 2, 3, die durch zwei benachbarte Erhebungen 8 eines Plattenelements 2, 3 definiert ist, senkrecht zur Verbindungslinie 11 orientiert, wobei eine Erhebung 8 des ersten Plattenelements 2 aus einer zentrierten Position relativ zu den nächsten drei Erhebungen 8 des zweiten Plattenelements 3 parallel zur Verbindungslinie 11 verschoben ist, sodass ihr Abstand zur nächsten Erhebung 8 des zweiten Plattenelements 3 in einer Richtung parallel zur Verbindungslinie 11 größer ist, als zu den beiden anderen nächsten Erhebungen 8 des zweiten Plattenelements 3.

Hydraulisch heißt das für das Kühlnetzwerk, dass der Strömungswiderstand in einer Richtung ungefähr senkrecht zur Verbindungslinie 11 zwischen Strömungseinlass 5 und Strömungsauslass 6, wesentlich niedriger ist als in der dazu senkrechten Richtung, d.h. ungefähr entlang der Verbindungslinie. Dies führt zu einer Verstärkung des Kühlwasserflusses in die Eckbereiche 21 des Strömungsraums 4 hinein.

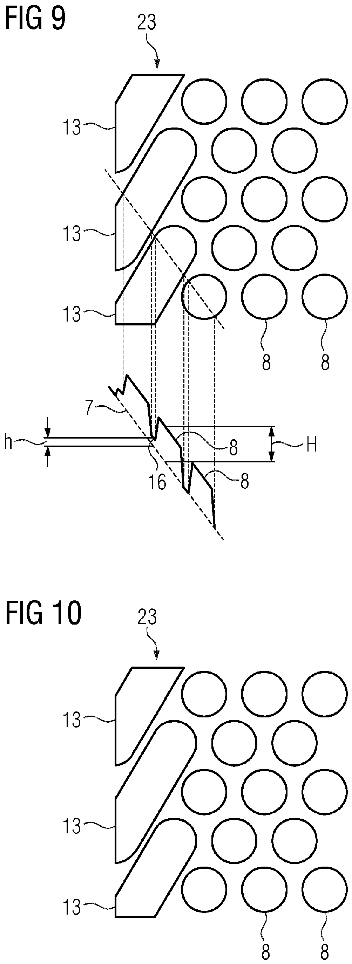

Die Figuren 9 und 10 zeigen ein Ausführungsbeispiel eines gegenüber dem Stand der Technik veränderten Randbereichs 23 der Plattenelemente 2, 3. Dabei zeigt Figur 9 schematisch einen horizontalen Schnitt durch einen Teil des ersten Plattenelements 2, d.h. einen Schnitt parallel zur Ebene des ersten Plattenelements 2. Figur 10 zeigt einen entsprechenden Schnitt für das zweite Plattenelement 3.

Figur 9 zeigt ferner einen vertikalen Schnitt durch das erste Plattenelement 2 im Randbereich 23. Der Schnitt verläuft quer zu Erhebungen 8, die im Randbereich 23 zu zweiten Strömungskanälen 13 zusammengefasst sind. Die zweiten Strömungskanäle 13 sind getrennt durch einen Trennsteg 16. Eine Höhe des Trennstegs 16, also die Differenz zwischen Höhe der Erhebungen 8 und Abstand des Trennstegs 16 von der Kontaktebene 7, ist frei wählbar und somit auch der Strömungswiderstand im Randbereich 23.

Mit h wird in Figur 9 der Abstand des Trennstegs 16 von der Kontaktebene 7 bezeichnet. Die Höhe der Erhebungen 8 ist mit H markiert. Ein vergleichsweise kleines h bedeutet einen vergleichsweise großen Strömungswiderstand im Randbereich 23, zumindest zwischen den zweiten Strömungskanälen 13, ein vergleichsweise großes h, d.h. der Steg entfällt nahezu, bedeutet folglich einen vergleichsweise kleinen Widerstand zwischen den zweiten Kanälen 13 im Randbereich 23. Im Extremfall entspricht h der Höhe H der Erhebungen 8 über der Kontaktebene 7.

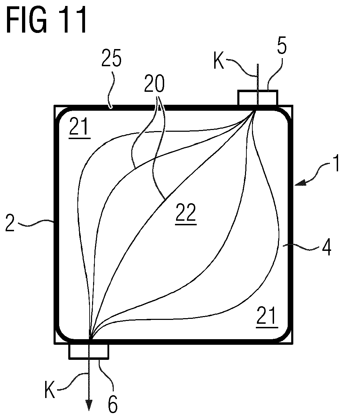

Mit den zweiten Strömungskanälen 13 und der entsprechenden Wahl der Höhe der Trennstege 16 lässt sich somit ein in den Randbereichen 23 umlaufender Ringkanal 25 bilden. Ein solcher Ringkanal 25 ist in der Figur 11 angedeutet. Die Darstellung in der Figur 11 ist sehr schematisch und unterscheidet sich von der Figur 6 lediglich durch dieses Merkmal. Der Ringkanal 25 muss nicht zwingend, wie in der Figur 11 dargestellt, auf dem gesamten Strömungspfad eine gleichbleibende Breite aufweisen. Abweichungen sind möglich, insbesondere in den Ecken kann es erwünscht sein, dass der Strömungswiderstand besonders gering ist.

## Patentansprüche

1. Bipolarplatte (1) für eine elektrochemische Zelle, umfassend einen zwischen einem ersten Plattenelement (2) und einem zweiten Plattenelement (3) angeordneten Strömungsraum (4) mit einem Strömungseinlass (5) sowie einem Strömungsauslass (6) für ein den Strömungsraum (4) durchströmendes Kühlmittel (K), wobei jedes Plattenelement (2, 3) eine Kontaktebene (7) zum Kontaktieren des jeweils anderen Plattenelements (2, 3) sowie zwischen dem Strömungseinlass (5) und dem Strömungsauslass (6) eine Vielzahl von aus der Kontaktebene (7) herausragenden und dem jeweils anderen Plattenelement (2, 3) abgewandten Erhebungen (8) aufweist, die zur Kontaktebene (7) hin Öffnungen (9) aufweisen, und wobei erste Strömungskanäle (10) durch die Öffnungen (9) der Erhebungen (8) gebildet sind, indem die Erhebungen (8) beider Plattenelemente (2, 3) zueinander versetzt sind, wobei jede Erhebung (8) mindestens eine Erhebung (8) des jeweils anderen Plattenelements (2, 3) zumindest teilweise überlappt, **dadurch gekennzeichnet, dass** ein richtungsabhängiger Strömungswiderstand in den ersten Strömungskanälen (10) der Bipolarplatte (1) eingestellt ist, indem die Erhebungen (8) auf den Plattenelementen (2, 3) in den Ecken regelmäßiger Dreiecke angeordnet sind, und die Plattenelemente (2, 3) gegeneinander versetzt angeordnet sind, sodass in einer Projektion auf die Kontaktebene (7) eine Erhebung (8) des ersten Plattenelements (2) innerhalb eines Dreiecks aus Erhebungen (8) des zweiten Plattenelements (3) außermittig angeordnet ist.

2. Bipolarplatte (1) nach Anspruch 1, wobei der Strömungswiderstand in Richtung einer Verbindungslinie (11) zwischen Strömungseinlass (5) und Strömungsauslass (6) größer ist als senkrecht dazu.

3. Bipolarplatte (1) nach einem der Ansprüche 1 oder 2, wobei die Erhebungen (8) kegelstumpfförmige Profile aufweisen.

4. Bipolarplatte (1) nach einem der vorhergehenden Ansprüche, wobei eine Hauptachse (24) eines Plattenelements (2, 3), die durch zwei benachbarte Erhebungen (8) eines Plattenelements (2, 3) definiert ist, senkrecht zur Verbindungslinie (11) orientiert ist, wobei eine Erhebung (8) des ersten Plattenelements (2) aus einer zentrierten Position relativ zu den nächsten drei Erhebungen (8) des zweiten Plattenelements (3) parallel zur Verbindungslinie (11) verschoben ist, sodass ihr Abstand zur nächsten Erhebung (8) des zweiten Plattenelements (3) in einer Richtung parallel zur Verbindungslinie (11) größer ist, als zu den beiden anderen nächsten Erhebungen (8) des zweiten Plattenelements (3).

5. Bipolarplatte (1) nach einem der vorhergehenden Ansprüche, wobei mindestens zwei Erhebungen (8) eines Plattenelements (2, 3) zu einem zweiten Strömungskanal (13) zusammengefasst sind.

6. Bipolarplatte (1) nach Anspruch 5, wobei die zweiten Strömungskanäle (13) zumindest in Randbereichen (23) der Bipolarplatte (1) ohne Strömungseinlass (5) oder Strömungsauslass (6) angeordnet sind.

7. Bipolarplatte (1) nach Anspruch 6, wobei die zweiten Strömungskanäle (13) einen in den Randbereichen (23) umlaufenden Ringkanal (25) bilden.

8. Bipolarplatte (1) nach einem der Ansprüche 5 bis 7, wobei zwischen zwei benachbarten zweiten Strömungskanälen (13) eines Plattenelements (2, 3) ein Trennsteg (16) gebildet ist, dessen Abstand zur Kontaktebene (7) von Null verschieden ist.

9. Bipolarplatte (1) nach Anspruch 8, wobei eine Höhe des Trennstegs (16) Null ist.

10. Bipolarplatte (1) nach einem der Ansprüche 5 bis 9, wobei eine Orientierung eines zweiten Strömungskanals (13) des ersten Plattenelements (2) von der Orientierung eines zweiten Strömungskanals (13) des zweiten Plattenelements (3) verschieden ist.

11. Elektrochemische Zelle umfassend mindestens eine Bipolarplatte (1) nach einem der vorhergehenden Ansprüche.

## Claims

1. Bipolar plate (1) for an electrochemical cell, comprising a flow space (4) which is disposed between a first plate element (2) and a second plate element (3) and has a flow inlet (5) and a flow outlet (6) for a coolant (K) that flows through the flow space (4), wherein each plate element (2, 3) has a contact plane (7) for contact with the respective other plate element (2, 3) and, between the flow inlet (5) and the flow outlet (6), a multitude of elevations (8) which project out of the contact plane (7) and face away from the respective other plate element (2, 3) and which have openings (9) towards the contact plane (7), and wherein first flow channels (10) are formed by the openings (9) of the elevations (8) in that the elevations (8) of the two plate elements (2, 3) are offset with respect to one another, wherein each elevation (8) at least partly overlaps with at least one elevation (8) of the respective other plate element (2, 3), **characterized in that** a direction-dependent flow resistance is established in the first flow channels (10) of the bipolar plate (1) **in that** the elevations (8) on the plate elements (2, 3) are disposed in the vertices of regular triangles, and the plate elements (2, 3) are arranged offset with respect to one another such that, in a projection onto the contact plane (7), an elevation (8) of the first plate element (2) is in an off-center arrangement within a triangle of elevations (8) of the second plate element (3).

2. Bipolar plate (1) according to Claim 1, wherein the flow resistance in the direction of a connecting line (11) between flow inlet (5) and flow outlet (6) is greater than at right angles thereto.

3. Bipolar plate (1) according to either of Claims 1 and 2, wherein the elevations (8) have frustoconical profiles.

4. Bipolar plate (1) according to any of the preceding claims, wherein a main axis (24) of a plate element (2, 3), said axis being defined by two adjacent elevations (8) on a plate element (2, 3), is oriented at right angles to the connecting line (11), wherein one elevation (8) on the first plate element (2) has been moved parallel to the connecting line (11) from a centered position relative to the closest three elevations (8) on the second plate element (3) such that the separation thereof from the closest elevation (8) on the second plate element (3) is greater in a direction parallel to the connecting line (11) than from the two other closest elevations (8) on the second plate element (3).

5. Bipolar plate (1) according to any of the preceding claims, wherein at least two elevations (8) on a plate element (2, 3) are combined to form a second flow channel (13).

6. Bipolar plate (1) according to Claim 5, wherein the second flow channels (13) are disposed at least in edge regions (23) of the bipolar plate (1) without a flow inlet (5) or flow outlet (6) .

7. Bipolar plate (1) according to Claim 6, wherein the second flow channels (13) form a circumferential ring channel (25) in the edge regions (23).

8. Bipolar plate (1) according to any of Claims 5 to 7, wherein a separating land (16) formed between two adjacent second flow channels (13) on a plate element (2, 3) has a non-zero distance from the contact plane (7).

9. Bipolar plate (1) according to Claim 8, wherein a height of the separating land (16) is zero.

10. Bipolar plate (1) according to any of Claims 5 to 9, wherein an orientation of a second flow channel (13) on the first plate element (2) is different than the orientation of a second flow channel (13) on the second plate element (3).

11. Electrochemical cell comprising at least one bipolar plate (1) according to any of the preceding claims.

## Revendications

1. Plaque (1) bipolaire d'une pile électrochimique, comprenant un espace (4) d'écoulement disposé entre un premier élément (2) de la plaque et un deuxième élément (3) de la plaque et ayant une entrée (5) d'écoulement ainsi qu'une sortie (6) d'écoulement d'un fluide (K) de refroidissement passant dans l'espace (4) d'écoulement, dans laquelle chaque élément (2, 3) de la plaque a un plan (7) de contact pour la mise en contact avec respectivement l'autre élément (2, 3) de la plaque ainsi que entre l'entrée (5) d'écoulement et la sortie (6) d'écoulement, une pluralité de surélévations (8) en saillie du plan (7) et non tournées vers respectivement l'autre élément (2, 3) de la plaque, qui ont des ouvertures (9) vers le plan (7) de contact, et dans lequel des premiers conduits (10) d'écoulement sont formés par les ouvertures (9) des surélévations (8), par le fait que les deux surélévations (8) des deux éléments (2, 3) de la plaque sont décalées les unes par rapport aux autres, dans laquelle chaque surélévation (8) chevauche au moins en partie au moins une surélévation (8) de respectivement l'autre élément (2, 3) de la plaque, **caractérisée en ce qu'**il est établi une résistance à l'écoulement en fonction du sens dans les premiers conduits (10) d'écoulement de la plaque (1) bipolaire, par le fait que les surélévations (8) sont disposées sur les éléments (2, 3) de la plaque aux sommets de triangles équilatéraux et que les éléments (2, 3) de la plaque sont disposés en étant décalés l'un par rapport à l'autre, de manière à ce que, dans une projection sur le plan (7) de contact, une surélévation (8) du premier élément (2) de la plaque soit disposée en dehors du centre d'un triangle constitué de surélévations (8) du deuxième élément (3) de la plaque.

2. Plaque (1) bipolaire suivant la revendication 1, dans laquelle la résistance à l'écoulement est plus grande dans la direction d'une ligne (11) de liaison entre l'entrée (5) et la sortie (6) d'écoulement que perpendiculairement à celle-ci.

3. Plaque (1) bipolaire suivant l'une des revendications 1 ou 2, dans laquelle les surélévations (8) ont des profils en tronc de cône.

4. Plaque (1) bipolaire suivant l'une des revendications précédentes, dans laquelle un axe (24) principal d'un élément (2, 3) de la plaque, qui est défini par deux surélévations (8) voisines d'un élément (2, 3) de la plaque est orienté perpendiculairement à la ligne (11) de liaison, dans laquelle une surélévation (8) du premier élément (2) de la plaque est décalée, parallèlement à la ligne (11) de liaison, d'une position centrée par rapport aux trois surélévations (8) les plus proches du deuxième élément (3) de la plaque, de manière à ce que sa distance à la surélévation (8) de la plus proche du deuxième élément (3) de la plaque soit plus grande dans une direction parallèlement à la ligne (11) de liaison que sa distance aux deux autres surélévations (8) les plus proches du deuxième élément (3) de la plaque.

5. Plaque (1) bipolaire suivant l'une des revendications précédentes, dans laquelle au moins deux surélévations (8) d'un élément (2, 3) de la plaque sont rassemblées en un deuxième conduit (13) d'écoulement.

6. Plaque (1) bipolaire suivant la revendication 5, dans laquelle les deuxièmes conduits (13) d'écoulement sont disposés au moins dans des parties (23) de bord de la plaque (1) bipolaire sans entrée (5) d'écoulement ou sortie (6) d'écoulement.

7. Plaque (1) bipolaire suivant la revendication 6, dans laquelle les deuxièmes conduits (13) d'écoulement forment un conduit (25) annulaire faisant le tour des parties (23) de bords.

8. Plaque (1) bipolaire suivant l'une des revendications 5 à 7, dans laquelle il est formé, entre deux deuxièmes conduits (13) d'écoulement voisins d'un élément (2, 3) de la plaque, une entretoise (16) de séparation, dont la distance au plan (7) de contact est différente de zéro.

9. Plaque (1) bipolaire suivant la revendication 8, dans laquelle une hauteur de l'entretoise (16) de séparation est nulle.

10. Plaque (1) bipolaire suivant l'une des revendications 5 à 9, dans laquelle une orientation d'un deuxième conduit (13) d'écoulement du premier élément (2) de la plaque est différente de l'orientation d'un deuxième conduit (13) d'écoulement du deuxième élément (3) de la plaque.

11. Pile électrochimique, comprenant au moins une plaque (1) bipolaire suivant l'une des revendications précédentes.
